# EUROPÄISCHE PATENTSCHRIFT

(11) **EP 1 115 652 B1**
(45) Veröffentlichungstag und Bekanntmachung des Hinweises auf die Patenterteilung: **09.04.2003**
(21) Anmeldenummer: 99939451.3
(22) Anmeldetag: 05.08.1999
(51) Int. Cl.: C01B 13/02, C08K 5/00

(54) **VORRICHTUNG ZUR PHOTOAKTIVIERTEN PRODUKTION VON SINGULETT-SAUERSTOFF UND VERFAHREN ZUR HERSTELLUNG DER VORRICHTUNG**
DEVICE FOR PHOTOACTIVATED PRODUCTION OF SINGLET OXYGEN AND METHOD FOR THE PRODUCTION OF THE DEVICE
DISPOSITIF PERMETTANT DE PRODUIRE PAR PHOTOACTIVATION DE L'OXYG NE SINGULET ET PROC D DE FABRICATION ASSOCI

(30) Priorität: 05.08.1998 DE 19835457
(43) Veröffentlichungstag der Anmeldung: 18.07.2001
(73) Patentinhaber: FRAUNHOFER-GESELLSCHAFT ZUR FÖRDERUNG DER ANGEWANDTEN FORSCHUNG E.V., 80636 München (DE)
(72) Erfinder: BRUCKER, Franz, D-79102 Freiburg (DE); KÖHL, Michael, D-79379 Britzingen (DE); LIESKE, Volker, D-79112 Freiburg (DE)
(74) Vertreter: Pfenning, Meinig & Partner
(86) Internationale Anmeldenummer: EP9905668
(87) Internationale Veröffentlichungsnummer: WO00007934

(56) Entgegenhaltungen:
- WO-A-90/07144
- DE-A- 3 526 797
- DE-A- 3 836 759
- US-A- 4 315 998
- US-A- 4 849 076

## Beschreibung

Die Erfindung betrifft eine Vorrichtung zur Produktion von Singulett-Sauerstoff und ein Verfahren zur Herstellung der Vorrichtung.

Sauerstoff liegt im Grundzustand als Triplett-Molekül vor und läßt sich durch Energiezufuhr in den angeregten Singulett-Zustand überführen. Angeregter Singulett-Sauerstoff ist besonders reaktionsfreudig und wird beispielsweise in der chemischen Prozeßtechnik, in der Medizin und in der Wasseraufbereitung eingesetzt.

Bisher wird Singulett-Sauerstoff entweder durch chemische Reaktionen oder durch Bestrahlen einer photoempfindlichen Schicht, welche sich in Kontakt zu Luft oder reinem Sauerstoff befindet, erzeugt. Durch Quenchen der Fluoreszenz werden die Triplett-Sauerstoffmoleküle durch einen strahlungslosen Übergang in den angeregten Singulett-Zustand versetzt. Da Singulett-Sauerstoff in Lösung nur eine sehr kurze Lebensdauer aufweist, wird er in der Regel in gasförmigem Zustand zum Eisatzort gebracht.

Bei der Herstellung von Singulett-Sauerstoff mit Hilfe von Photosensibilisatoren ist nachteilhaft, daß eine Reihe von Photosensibilisatoren als Beschichtungsmaterial ungeeignet sind. Einer dieser als Beschichtungsmaterial ungeeigneten Photosensibilisatoren ist beispielsweise Kupfer(II)-Phthalocyanin. Dieser Farbstoff ist wasserunlöslich und daher für den Körper schlecht aufzunehmen. Deshalb ist dieser Farbstoff besonders geeignet für medizinische Anwendungen wie z.B. in Inhalationsgeräten für Singulett-Sauerstoff. Bisher finden Kupfer(II)-Phthalocyanin und eine Reihe weiterer Photosensibilisatoren jedoch aufgrund ihrer aufwendigen Verarbeitung kaum Verwendung für die photoaktivierte Herstellung von Singulett-Sauerstoff.

Die US-A-4 315 998 beschreibt kugelförmige Polymerteilchen die einen Photosensibilisator enthalten.

Die WO 90 07 144 A erwähnt die Herstellung eines Formkörpers, wobei Polymer und Photosensibilisator gemischt sind.

Ausgehend von diesen Problemen liegt der Erfindung die Aufgabe zugrunde, eine Vorrichtung anzugeben, welche die photoaktivierte Herstellung von Singulett-Sauerstoff gestattet, ohne daß auf ein Beschichtungsverfahren zum Bereitstellen des Photosensibilisators zurückgegriffen werden müßte. Aufgabe ist weiterhin, ein Verfahren zum Herstellen einer derartigen Vorrichtung anzugeben.

Diese Aufgabe wird gelöst durch eine Vorrichtung gemäß Anspruch 1 und ein Verfahren gemäß Anspruch 8. Die Unteransprüche betreffen bevorzugte und vorteilhafte Ausgestaltungen der Erfindung.

Erfindungsgemäß wird vorgeschlagen, einen oder mehrere Photosensibilisatoren mit einem oder mehreren polymeren oder monomeren Materialien zu mischen und aus der Mischung einen Formkörper beliebiger Geometrie herzustellen. Der Formkörper enthält dann mindestens einen Photosensibilisator, eingebettet in einer polymeren Matrix, welche aus dem polymeren bzw. dem polymerisierten monomeren Material besteht. Triplett-Sauerstoff kann an einer äußeren oder inneren Oberfläche des Formkörpers mit dem Photosensibilisator in Kontakt treten und durch Photoaktivierung zu Singulett-Sauerstoff angeregt werden.

Auf diese Weise können auch Photosensibilisatoren, welche sich nicht oder nur schwer mit Beschichtungsverfahren applizieren lassen, immobilisieren und zur photoaktivierten Herstellung von Singulett-Sauerstoff eingesetzt werden. Die erfindungsgemäße Vorrichtung ist jedoch nicht auf derartige, als Beschichtungsmaterial ungeeignete Photosensibilisatoren beschränkt. Vielmehr können beliebige Photosensibilisatoren auf diese Weise zur Herstellung von Singulett-Sauerstoff eingesetzt werden.

In vielen Fällen ist es vorteilhaft, zumindest einen Teil einer Oberfläche des Formkörpers einer mechanischen oder chemischen Oberflächenbehandlung zu unterziehen. Auf diese Weise kann der an den Formkörperoberflächen freiliegende Photosensibilisatoranteil vergrößert werden. Außerdem kann auf diese Weise der Photosensibilisator freigelegt werden, falls aufgrund des gegenseitigen Benetzungsverhaltens von Photosensibilisator und Matrixmaterial nach dem Herstellen des Formkörpers zunächst nur Matrixmaterial an den Formkörperoberflächen angeordnet ist. In jedem Falle bewirkt die Oberflächenbehandlung (z.B. Aufrauhen durch Schleifen, Sandstrahlen, Sägen, Ätzen, Lösen usw.) eine Steigerung der Produktion von Singulett-Sauerstoff.

Eine weitere Steigerung der Produktion von Singulett-Sauerstoff kann erreicht werden, wenn PolymerMaterialien als Matrix verwendet werden, die eine hohe Sauerstoff-Permeation aufweisen.

Vorteilhafterweise kann der Mischung eine Substanz zugegeben werden, welche nach dem Herstellen des Formkörpers wieder ausgewaschen werden kann. Aufgrund der durch das Auswaschen entstehenden inneren Oberflächen in Form von Poren kann die aktive Oberfläche weiterhin vergrößert werden und/oder ein poröser Formkörper hergestellt werden, welcher den Durchgang von flüssigen oder gasförmigen Medien erlaubt.

Die erfindungsgemäßen Formkörper-Oberflächen weisen eine hohe chemische Resistenz auf, welche die Verwendung der erfindungsgemäßen Vorrichtung in der Medizintechnik (z.B. in der Endoskopie), in der Wasseraufbereitung und in der chemischen Prozeßtechnik erlauben. Ein Einsatz der Vorrichtung in Flüssigkeiten ist möglich.

Weitere Einzelheiten und Vorteile der Erfindung ergeben sich aus der nachfolgenden Beschreibung von Ausführungsbeispielen.

Gemäß einem ersten Ausführungsbeispiel kann ein Photosensibilisator wie Kupfer(II)-Phthalocyanin in einer Matrix aus fluorierten Kohlenwasserstoffen eingebettet sein. Dazu wird der Photosensibilisator mit PTFE-Granulat gemischt und die Mischung anschließend verpreßt. Der Anteil des Photosensibilisators im Formkörper beträgt bevorzugt weniger als 50 Gew-% und besonders bevorzugt weniger als 10 Gew-%. Im Anschluß an das Pressen wird ein temperaturgeführter Sinterprozeß zur Herstellung eines mechanisch bearbeitbaren Festkörpers durchgeführt. Im Rahmen des Sinterprozesses wird die gepreßte Mischung über einige Tage langsam auf Temperaturen von über 300 °C und bevorzugt auf eine Spitzentemperatur von 380 °C aufgeheizt. Daraufhin läßt man den gesinterten Formkörper wieder langsam abkühlen. Abschließend wird der Formkörper einer mechanischen Oberflächenbearbeitung unterzogen.

Überraschenderweise hat sich herausgestellt, daß derartig hergestellte, Kupfer(II)-Phthalocyanin enthaltende Formkörper zur Herstellung von Singulett-Sauerstoff eine ausgesprochen hohe thermische Stabilität von bis zu 300 °C aufweisen, ohne daß eine thermische Degradation des Photosensibilisators einsetzt.

Gemäß einem weiteren Ausführungsbeispiel wird ein Photosensibilisator (z.B. ausgewählt aus Porphyrinen, Phtalocyaninen, Chlorinen, Tetraphenylporphyrinen, Benzoporphyrin-Derivaten, Purpurinen, Pheophorbiden und deren Metallkomplexen, Kupfer(II)-Phtalocyanin, Rose Bengal und 5-Aminolävulinsäure) mit einem Polymergranulat, Monomeren (z.B. Acrylat-Monomeren) oder Harzen (z.B. Polyesterharzen) gemischt. Die Mischung kann anschließend zu einem Granulat weiterverarbeitet werden. Durch Spritzgießen, Extrudieren, Aushärten oder Polymerisieren kann dann aus der Mischung oder dem Granulat ein Formkörper, welcher mechanisch bearbeitbar ist, hergestellt werden. Da die maximal auftretenden Temperaturen bei diesen Herstellungsverfahren wesentlich geringer sind als die beim Sintern gemäß dem ersten Ausführungsbeispiel auftretenden Temperaturen, können im Rahmen des zweiten Ausführungsbeispieles auch weniger temperaturstabile Photosensibilisatoren verwendet werden.

Bevorzugt ist der Einsatz einer transparenten Matrix. Dies ermöglicht die Anregung des Photosensibilisators durch Beleuchtung auch von der rückwärtigen Seite mittels Kunst- oder Sonnenlicht. Die Ausführung des Formkörpers als transparente Folie findet Anwendung als Abdeckung über Böden zur Verbesserung der Bodenqualität durch direkte Einwirkung von Singulett-Sauerstoff und durch selektive Anregung des Wachstums der aeroben Bakterien. Als Abdeckung von Gewässern (Auqarien, Teichen, Seen) wird durch den Singulett-Sauerstoff die Wasserqualität verbessert. Im Bereich der Dermatologie und der Plastischen Chirurgie lassen sich transparente Folien zur Förderung von Heilungsprozessen einsetzen.

Eine transparente Matrix enthaltende dünne flächige Formkörper können beispielsweise auf Fenstern aufgebracht werden oder als Fenster fungieren und unter Verwendung von Sonnenlicht oder Kunstlicht für die Produktion von Singulett-Sauerstoff zur Klimaverbesserung in Räumen eingesetzt werden.

## Patentansprüche

1. Formkörper zur photoaktivierten Produktion von singulett-Sauerstoff,
**dadurch gekennzeichnet, daß**
der Formkörper durch Pressen und anschließendes Sintern, Spritzgießen, Extrudieren, Aushärten oder Polymerisieren aus einer Mischung aus mindestens einem für die photoaktiviert Herstellung von Singulett-Sauerstoff geeigneten Photosensibilisator und Polymer erhalten wird,
wobei der Photosensibilator in einer Polymermatrix eingebettet ist.

2. Formkörper nach Anspruch 1, **dadurch gekennzeichnet, daß** der Photosensibilisatoranteil des Formkörpers weniger als 50 Gew.-% beträgt.

3. Formkörper nach Anspruch 1 oder 2, **dadurch gekennzeichnet, daß** der Photosensibilisator ausgewählt ist aus Porphyrinen, Phthalocyaninen, Chlorinen, Tetraphenylporphyrinen, Benzoporphyrin-Derivaten, Purpurinen, Pheophorbiden und deren Metallkomplexen.

4. Formkörper nach einem der Ansprüche 1 bis 3, **dadurch gekennzeichnet, daß** der Photosensibilisator ausgewählt ist aus Kupfer(II)Phthalocyanin, Rose Bengal und 5-Aminolävulinsäure.

5. Formkörper nach einem der Ansprüche 1 bis 4, **dadurch gekennzeichnet, daß** die Matrix transparent ist.

6. Formkörper nach einem der Ansprüche 1 bis 5, **dadurch gekennzeichnet, daß** der Formkörper porös ist und/oder eine rauhe Oberfläche besitzt.

7. Formkörper nach einem der Ansprüche 1 bis 6, **dadurch gekennzeichnet, daß** der Formkörper eine Folie ist.

8. Verfahren zur Herstellung eines Formkörpers zur photoaktivierten Produktion von Singulett-Sauer-Stoff, **dadurch gekennzeichnet, daß** mindestens ein für die photoaktivierte Herstellung von Singulett-Sauerstoff geeigneter Photosensibilisator mit mindestens einem polymeren oder monomere Material gemischt wird und aus der Mischung durch Pressen und anschließendes Sintern, Spritzgießen, Extrudieren, Aushärten oder Polymerisieren der Formkörper hergestellt wird.

9. Verfahren nach Anspruch 8, **dadurch gekennzeichnet, daß** aus der Mischung ein Granulat hergestellt wird, das zur Herstellung des Formkörpers verwendet wird.

10. Verfahren nach Anspruch 8 oder 9, **dadurch gekennzeichnet, daß** der Formkörper zumindest bereichsweise einer Oberflächenbehandlung unterzogen wird.

11. Verfahren nach einem der Ansprüche 8 bis 10, **dadurch gekennzeichnet, daß** der Mischung zusätzlich eine Substanz zugegeben wird, welche nach dem Herstellen des Formkörpers wieder ausgewaschen wird.

12. Verfahren nach einem der Ansprüche 8 bis 11, **dadurch gekennzeichnet, daß** der Photosensibilisator mit Polymergranulat, Mpnomeren und/oder Harzen gemischt wird.

13. Verfahren nach einem der Ansprüche 8 bis 12, **dadurch gekennzeichnet, daß** der Photosensibilistor mit fluorierten Kohlenwasserstoffen gemischt wird.

14. Verfahren nach einem der Ansprüche 8 bis 13, **dadurch gekennzeichnet, daß** der Photosensibilisator mit PTFE-Granulat gemischt wird.

15. Verfahren nach Anspruch 14, **dadurch gekennzeichnet, daß** das Sintern bei Temperaturen von über 300 °C durchgeführt wird.

16. Verwendung eines Formkörpers nach Anspruch 7 zur Abdeckung von Oberflächen.

17. Verwendung nach Anspruch 16, **dadurch gekennzeichnet, daß** Böden oder Gewässer abgedeckt werden.

## Claims

1. Preform for photoactivated production of singlet oxygen, **characterized in that** the preform is obtained by compression and subsequent sintering, injection moulding, extrusion, curing or polymerization from a mixture of at least one photosensitizer suitable for photoactivated preparation of singlet oxygen, and polymer, where the photosensitizer is embedded in a polymer matrix.

2. Preform according to Claim 1, **characterized in that** the photosensitizer content of the preform is less than 50% by weight.

3. Preform according to Claim 1 or 2, **characterized in that** the photosensitizer is selected from porphyrins, phthalocyanines, chlorins, tetraphenylporphyrins, benzoporphyrin derivatives, purpurins, pheophorbides and metal complexes thereof.

4. Preform according to any of Claims 1 to 3, **characterized in that** the photosensitizer is selected from copper(II) phthalocyanine, Rose Bengal and 5-aminolaevulinic acid.

5. Preform according to any of Claims 1 to 4, **characterized in that** the matrix is transparent.

6. Preform according to any of Claims 1 to 5, **characterized in that** the preform is porous and/or has a rough surface.

7. Preform according to any of Claims 1 to 6, **characterized in that** the preform is a sheet.

8. Process for the preparation of a preform for photoactivated production of singlet oxygen, **characterized in that** at least one photosensitizer suitable for photoactivated preparation of singlet oxygen is mixed with at least one polymeric or monomeric material, and the preform is prepared from the mixture by compression and subsequent sintering, injection moulding, extrusion, curing or polymerization.

9. Process according to Claim 8, **characterized in that** granules are prepared from the mixture and are used to prepare the preform.

10. Process according to Claim 8 or 9, **characterized in that** the preform is subjected to a surface treatment at least regionally.

11. Process according to any of Claims 8 to 10, **characterized in that** additionally a substance which is washed out again after preparation of the preform is added to the mixture.

12. Process according to any of Claims 8 to 11, **characterized in that** the photosensitizer is mixed with polymer granules, monomers and/or resins.

13. Process according to any of Claims 8 to 12, **characterized in that** the photosensitizer is mixed with fluorinated hydrocarbons.

14. Process according to any of Claims 8 to 13, **characterized in that** the photosensitizer is mixed with PTFE granules.

15. Process according to Claim 14, **characterized in that** the sintering is carried out at temperatures above 300°C.

16. Use of a preform according to Claim 7 for covering surfaces.

17. Use according to Claim 16, **characterized in that** areas of soil or water are covered.

## Revendications

1. Corps façonné permettant de produire par photoactivation de l'oxygène singulet,
**caractérisé en ce que** le corps façonné est obtenu par compression et frittage subséquent, injection, extrusion, durcissement ou polymérisation d'un mélange composé d'au moins un photosensibilisateur, adapté à la production par photoactivation de l'oxygène singulet, et de polymère, le photosensibilisateur étant noyé dans une matrice polymère.

2. Corps façonné selon la revendication 1, **caractérisé en ce que** la teneur en photosensibilisateur du corps façonné est inférieure à 50 % en poids.

3. Corps façonné selon la revendication 1 ou 2, **caractérisé en ce que** le photosensibilisateur est choisi parmi les porphyrines, la phtalocyanines, les chlorures, les tétraphénylporphyrines, les dérivés de benzoporphyrine, les purpurines, les phéophorbides et leurs complexes métalliques.

4. Corps façonné selon l'une des revendications 1 à 3, **caractérisé en ce que** le photosensibilisateur est choisi parmi la phtalocyanine de cuivre (II), le rose bengale et l'acides-aminolévulinique.

5. Corps façonné selon l'une des revendications 1 à 4, **caractérisé en ce que** la matrice est transparente.

6. Corps façonné selon l'une des revendications 1 à 5, **caractérisé en ce que** le corps façonné est poreux et / ou possède une surface rugueuse.

7. Corps façonné selon l'une des revendications 1 à 6, **caractérisé en ce que** le corps façonné est une feuille.

8. Procédé de fabrication d'un corps façonné permettant de produire par photoactivation de l'oxygène singulet, **caractérisé en ce que** au moins un photosensibilisateur, adapté à la production par photoactivation de l'oxygène singulet, est mélangé avec au moins un matériau polymère ou monomère et le corps façonné est fabriqué à partir du mélange par compression et frittage subséquent, injection, extrusion, durcissement ou polymérisation.

9. Procédé selon la revendication 8, **caractérisé en ce qu'**il est fabriqué, à partir du mélange, un granulat qui est utilisé pour la fabrication du corps façonné.

10. Procédé selon la revendication 8 ou 9, **caractérisé en ce que** le corps façonné est soumis au moins par zones à un traitement de surface.

11. Procédé selon l'une de revendications 8 à 10, **caractérisé en ce qu'**il est ajouté en plus au mélange une substance qui éliminée par lavage après la fabrication du corps façonné.

12. Procédé selon l'une des revendications 8 à 11, **caractérisé en ce que** le photosensibilisateur est mélangé avec un granulat polymère, des monomères et /ou des résines.

13. Procédé selon l'une des revendications 8 à 12, **caractérisé en ce que** le photosensibilisateur est mélangé avec des hydrocarbures fluorés.

14. Procédé selon l'une des revendications 8 à 13, **caractérisé en ce que** le photosensibilisateur est mélangé avec un granulat de PTFE.

15. Procédé selon la revendication 14, **caractérisé en ce que** le frittage est réalisé à des températures supérieures à 300°C.

16. Utilisation d'un corps façonné selon la revendication 7 pour le recouvrement de surfaces.

17. Utilisation selon la revendication 16, **caractérisée en ce que** des sols ou des eaux sont recouverts.
